# EUROPÄISCHE PATENTSCHRIFT

(11) **EP 1 198 618 B1**
(45) Veröffentlichungstag und Bekanntmachung des Hinweises auf die Patenterteilung: **26.11.2003**
(21) Anmeldenummer: 00927220.4
(22) Anmeldetag: 19.05.2000
(51) Int. Cl.: C23C 22/83, C23C 22/73

(54) **NACHPASSIVIERUNG EINER PHOSPHATIERTEN METALLOBERFLÄCHE**
POST-PASSIVATION OF A PHOSPHATIZED METAL SURFACE
POST-PASSIVATION D'UNE SURFACE METALLIQUE PHOSPHATEE

(30) Priorität: 28.05.1999 DE 19924656; 07.12.1999 DE 19958775
(43) Veröffentlichungstag der Anmeldung: 24.04.2002
(73) Patentinhaber: Henkel Kommanditgesellschaft auf Aktien, 40589 Düsseldorf-Holthausen (DE)
(72) Erfinder: BROUWER, Jan-Willem, D-47877 Willich (DE); KUHM, Peter, D-40724 Hilden (DE)
(86) Internationale Anmeldenummer: EP0004528
(87) Internationale Veröffentlichungsnummer: WO00073536

(56) Entgegenhaltungen:
- EP-A- 0 012 695
- EP-A- 0 149 720
- WO-A-95/31587
- WO-A-98/56963
- DE-A- 3 400 339
- DE-C- 705 067
- FR-A- 2 449 135
- US-A- 3 647 568
- PATENT ABSTRACTS OF JAPAN vol. 004, no. 077 (C-013), 4. Juni 1980 (1980-06-04) -& JP 55 041930 A (NIPPON PAINT CO LTD), 25. März 1980 (1980-03-25)
- CHEMICAL ABSTRACTS, vol. 112, no. 22, 28. Mai 1990 (1990-05-28) Columbus, Ohio, US; abstract no. 202820j, OTA T.: "Conversion coating of steel strip for high corrosion resistance and paintability" Seite 265; XP000157063 -& JP 01 168880 A (OTA T) 4. Juli 1989 (1989-07-04)

## Beschreibung

Die Erfindung betrifft ein Verfahren zur Nachpassivierung einer phosphatierten Metalloberfläche und liegt damit auf dem allgemeinen Gebiet der Phosphatierung von Metallen. Das Verfahren ist anwendbar zur Behandlung phosphatierbarer Metalloberflächen, beispielsweise von Oberflächen aus Stahl, verzinktem oder legierungsverzinktem Stahl, Aluminium, aluminiertem oder legierungsaluminiertem Stahl. Eine Ausführungsform des Verfahrens besteht darin, daß aus dem Überlauf der Nachpassivierungslösung oder aus dem Spülwasser nach der Nachpassivierung Wirkkomponenten wie beispielsweise zweiwertige Metallionen und Phosphationen durch Membranfiltration (Nanofiltration, Umkehrosmose) aufkonzentriert und in die Phosphatierlösung überführt werden.

Dabei kann die Phosphatierung, die dem erfindungsgemaßen Verfahren zur Nachpassivierung vorausgeht, als schichtbildende oder als nichtschichtbildende Phosphatierung ausgeführt werden. Bei der nichtschichtbildenden Phosphatierung, auch als Eisenphosphatierung bezeichnet, enthält die Phosphatierungslösung keine Kationen, die in die sich ausbildende, in der Regel röntgenamorphe, Phosphat- und Oxidschicht eingebaut werden. Vielmehr enthält die durch die nichtschichtbildende Phosphatierung erzeugte Schutzschicht auf den Metalloberflächen lediglich Kationen, die aus der Metalloberfläche selbst stammen. Derartige nichtschichtbildende Phosphatierverfahren sind im Stand der Technik bekannt, beispielsweise aus der DE-A-44 17 965.

Die nichtschichtbildende Phosphatierung ist als Vorbehandlung vor einer Lackierung von Metallgegenständen geeignet, an die keine all zu großen Anforderungen an Korrosionsbeständigkeit gestellt werden. Beispiele hierfür sind landwirtschaftliche Maschinen sowie Haushaltsgeräte wie beispielsweise Kühlschränke und Waschmaschinen sowie Einrichtungsgegenstände aus Stahl.

Als Vorbehandlung vor einer Lackierung von Metallgegenständen, an die höhere Ansprüche auf Korrosionsschutz gestellt werden wie beispielsweise für Automobilkarosserien ist eine schichtbildende Phosphatierung gebräuchlich. Hierbei werden in der Regel kristalline Metallphosphatschichten abgeschieden. Die Behandlungslösung für eine schichtbildende Phosphatierung enthält Kationen, die in die Phosphatschicht eingebaut werden. Hier sind insbesondere Zinkionen sowie Mangan- und/oder Nickelionen zu nennen.

Die schichtbildende Phosphatierung von Metallen verfolgt das Ziel, auf der Metalloberfläche festverwachsene Metallphosphatschichten zu erzeugen, die für sich bereits Korrosionsbeständigkeit verbessern und in Verbindung mit Lacken und anderen organischen Beschichtungen zu einer wesentlichen Erhöhung der Haftung und der Resistenz gegen Unterwanderung bei Korrosionsbeanspruchung beitragen. Solche Phosphatierverfahren sind seit langem im Stand der Technik bekannt. Für die Vorbehandlung vor der Lackierung eignen sich insbesondere die Niedrig-Zink-Phosphatierverfahren, bei denen die Phosphatierlösungen vergleichsweise geringe Gehalte an Zinkionen von z. B. 0,5 bis 2 g/l aufweisen. Ein wesentlicher Parameter in diesen Niedrig-Zink-Phosphatierbädern ist das Gewichtsverhältnis Phosphationen zu Zinkionen, das üblicherweise im Bereich > 12 liegt und Werte bis zu 30 annehmen kann.

Es hat sich gezeigt, daß durch die Mitverwendung anderer mehrwertiger Kationen als Zink in den Phosphatierbädern Phosphatschichten mit deutlich verbesserten Korrosionsschutz- und Lackhaftungseigenschaften ausgebildet werden können. Beispielsweise finden Niedrig-Zink-Verfahren mit Zusatz von z. B. 0,5 bis 1,5 g/l Manganionen und z. B. 0,3 bis 2,0 g/l Nickelionen als sogenannte Trikation-Verfahren zur Vorbereitung von Metalioberflächen für die Lackierung, beispielsweise für die kathodische Elektrotauchlackierung von Autokarosserien, weite Anwendung.

Vor der Phosphatierung, insbesondere vor der schichtbildenden Phosphatierung, werden die Metallteile wie beispielsweise Automobilkarosserien in der Regel gereinigt und in einem Aktivierbad, das üblicherweise kolloide Titanphosphatpartikel enthält, für die nachfolgende Phosphatierung aktiviert. Nach dieser Reinigung und vor der Aktivierung oder der Phosphatierung werden die Metallteile üblicherweise mit Wasser gespült. Auf den Phosphatierschritt schließt sich in der Regel eine Nachpassivierung an, die die Aufgabe hat, den durch die Phosphatierung bewirkten Korrosionsschutz weiter zu verbessern. Als Nachpassivierungslösung eignen sich beispielsweise saure chromathaltige Lösungen. Aus Umwelt- und Arbeitsschutzgesichtspunkten ist die Verwendung chromathaltiger Nachpassivierungslösungen jedoch bedenklich. Daher hat es nicht an Versuchen gefehlt, Nachpassivierungslösungen für die Nachbehandlung phosphatierter Metalloberflächen zu finden, die die Nachteile chromathaltiger Lösungen nicht aufweisen. Praktisch genutzt werden heutzutage Nachpassivierungslösungen, die als Wirkkomponenten Polyvinylphenolverbindungen, Hexafluorotitanate oder -zirkonate und/oder Kupferionen enthalten. Die Nachpassivierungslösungen enthalten damit in der Regel Wirkkomponenten, die in der Phosphatierungslösung selbst nicht eingesetzt werden. Daher muß in der Praxis darauf geachtet werden, daß Komponenten der Nachpassivierungslösung nicht in die Phosphatierungslösung verschleppt werden.

Aus der DE-A-34 00 339 ist es bekannt, nickelhaltige Lösungen zur Nachpassivierung von Phosphatschichten einzusetzen. Dabei wird als Nickelsalz vorzugsweise das Acetat verwendet. Acetationen sollten jedoch nicht in die Phosphatierlösung eingeschleppt werden, da sie dort zu Essigsäure werden und zu einer starken Geruchsbelästigung führen.

Die Erfindung stellt sich demgegenüber die Aufgabe, eine Nachpassivierungslösung zur Verfügung zu stellen, die nur solche Wirkkomponenten enthält, die auch in einer Phosphatierungslösung eingesetzt werden. Dies ist ein Teilaspekt der erweiterten Aufgabe, die im Gesamtprozeß der Phosphatierung eingesetzten Wirkstoffe zu minimieren sowie den Wasserverbrauch einzuschränken.

Die Erfindung betrifft ein Verfahren zur Nachpassivierung einer phosphatierten Metalloberfläche, dadurch gekennzeichnet, daß man die phosphatierte Metalloberfläche mit einer wäßrigen Nachpassivierungslösung behandelt, die nur solche Wirkkomponenten enthält, die auch in einer Phosphatierlösung eingesetzt werden und die 50 bis 500 mg/l Nickelionen und 200 bis 1500 mg/l Phosphationen enthält,
wobei man die phosphatierte Metalloberfläche für eine Zeitdauer im Bereich von 10 Sekunden bis 5 Minuten mit der wäßrigen Nachpassivierungslösung in Kontakt bringt und anschließend mit Wasser abspült, und entweder
a) nach der Nachpassivierung anfallendes Spülwasser in die Nachpassivierungslösung überführt, wobei kontinuierlich oder diskontinuierlich ein Teil der Nachpassivierungslösung einer Nanofiltration oder einer Umkehrosmose unterzogen wird und man das Retentat der Nanofiltration oder der Umkehrosmose in die Phosphatierlösung überführt, mit der die Metalloberfläche vor der Nachpassivierung phosphatiert wird oder
b) die phosphatierte Metalloberfläche vor der Behandlung mit der Nachpassivierungslösung mit Wasser spült, sie nach der Behandlung mit der Nachpassivierungslösung erneut mit Wasser spült und Spülwasser aus der Spülung nach der Nachpassivierung in das Spülwasser für die Spülung vor der Nachpassivierung überführt, wobei ein Teil des Spülwassers, das zum Spülen zwischen Phosphatierung und Nachpassivierung verwendet wird, kontinuierlich oder diskontinuierlich einer Nanofiltration oder einer Umkehrosmose unterzogen wird und man das Retentat (Konzentrat) der Nanofiltration oder der Umkehrosmose in die Phosphatierlösung überführt, mit der die Metalloberfläche vor der Nachpassivierung phosphatiert wird.

Dabei kann die Behandlung der phosphatierten Metalloberfläche mit der Nachpassivierungslösung so ausgestaltet sein, daß die phosphatierte Metalloberfläche mit der Nachpassivierungslösung besprüht wird oder daß sie in die Nachpassivierungslösung eingetaucht wird. Vorzugsweise enthält die Nachpassivierungslösung einen größeren Gewichtsanteil Phosphationen als Nickelionen. Dabei werden die in der Nachpassivierungslösung vorliegenden Anionen der Phosphorsäure rechnerisch so behandelt, als würden sie komplett als tertiäre Phosphationen vorliegen. Tatsächlich stellt sich jedoch je nach pH-Wert der Nachpassivierungslösung das entsprechende Protolysegleichgewicht der Phosphationen ein. Da der pH-Wert der Nachpassivierungslösung vorzugsweise im Bereich zwischen 3 bis 6 und insbesondere im Bereich zwischen 3,5 und 4,5 liegt, liegen in der Praxis die Anionen der Phosphorsäure weitgehend als Dihydrogenphosphationen vor. Für die Berechnung der Gewichtsverhältnisse kann dies jedoch in der Praxis vernachlässigt werden, da die Masse der Protonen nur sehr wenig zur Gesamtmasse der Anionen der Phosphorsäure beiträgt. Vorzugsweise stellt man ein solches Gewichtsverhältnis zwischen Nickelionen und Phosphationen ein, daß die Masse der Phosphationen das 2- bis 5-fache der Masse der Nickelionen beträgt.

Vorzugsweise führt man das erfindungsgemäße Verfahren so aus, daß die wäßrige Nachpassivierungslösung eine Temperatur zwischen etwa 10 und etwa 50 °C aufweist. Bevorzugt ist der Temperaturbereich zwischen 15 und 30 °C. Beispielsweise kann die Nachpassivierungslösung Raumtemperatur, also eine Temperatur im Bereich zwischen 18 und 25 °C haben.

Man bringt die phosphatierte Metalloberfläche für eine Zeitdauer im Bereich von etwa 10 Sekunden bis etwa 5 Minuten, insbesondere für eine Zeitdauer zwischen etwa 30 Sekunden und 2 Minuten mit der wäßrigen Nachpassivierungslösung in Kontakt. Dies heißt, daß man die Metalloberfläche in die Nachpassivierungslösung eintaucht oder sie mit dieser besprüht oder beide Verfahrensweisen nacheinander ausführt. Anschließend spült man die phosphatierten und nachpassivierten Metalloberflächen mit Wasser. Hierfür wird vorzugsweise vollentsalztes Wasser eingesetzt.

Das erfindungsgemäße Verfahren kann als Nachpassivierung nach einer nichtschichtbildenden Phosphatierung eingesetzt werden. Demnach besteht eine Ausführungsform der Erfindung darin, daß es sich bei der phosphatierten Metalloberfläche um eine Metalloberfläche handelt, die mit einem nichtschichtbildenden Phosphatierverfahren phosphatiert wurde.

Das erfindungsgemäße Verfahren ist jedoch speziell dafür konzipiert, zur Nachpassivierung einer Metalloberfläche eingesetzt zu werden, die mit einem schichtbildenden Zinkphosphatierverfahren phosphatiert wurde und die daher eine kristalline Metallphosphatschicht trägt. Dabei liegt die flächenbezogene Masse dieser kristallinen Metallphosphatschicht in der Regel im Bereich zwischen etwa 1 und etwa 3 g/m³. Demnach betrifft die Erfindung in einem weiteren Aspekt ein Verfahren zur Nachpassivierung einer phosphatierten Metalloberfläche, wobei es sich bei der phosphatierten Metalloberfläche um eine Metalloberfläche handelt, die mit einem schichtbildenden Zinkphosphatierverfahren phosphatiert wurde. Hierfür kommt insbesondere ein Niedrigzink-Verfahren in Betracht Ein solches Phosphatierverfahren weist beispielsweise folgende Merkmale auf:

Die Zink-Gehalte liegen vorzugsweise im Bereich von 0,4 bis 2 g/l und insbesondere von 0,5 bis 1,5 g/l. Das Gewichtsverhältnis Phosphationen zu Zinkionen in den Phosphatierbädem kann in weiten Grenzen schwanken, sofern es im Bereich zwischen 3,7 und 30 liegt. Ein Gewichtsverhältnis zwischen 10 und 20 ist besonders bevorzugt.

Dabei kann das Phosphatierbad außer den Zink- und Phosphationen weitere Komponenten enthalten, wie sie derzeit in Phosphatierbädern üblich sind. Insbesondere können zusätzlich 0,01 bis 2,5 g/l, vorzugsweise 0,3 bis 2,0 g/l Nickelionen anwesend sein. Daneben kann die Phosphatierlösung, wie für Trikation-Verfahren üblich, 0,1 bis 4 g/l, insbesondere 0,5 bis 1,5 g/l Manganionen enthalten. Weiterhin kann die Phosphatierlösung zusätzlich zu den Zinkionen und ggf. zusammen mit den Nickel- und/oder Manganionen als weitere Metallionen enthalten:

| | |
|---|---|
| 0,2 bis 2,5 g/l | Magnesium(II), |
| 0,2 bis 2,5 g/l | Calcium(II), |
| 0,1 bis 2 g/l | Cobalt(II). |

Insbesondere geeignet ist das Verfahren für die Nachpassivierung einer Metalloberfläche, die mit einer nickelhaltigen Zinkphosphatierlösung phosphatiert wurde. Dies ermöglicht die nachstehend beschriebene Ausführungsform der Erfindung, bei der letztlich Nickel- und Phosphationen aus der Nachpassivierungslösung in die Phosphatierlösung überführt werden. Hierdurch können Rohstoffe und - bei entsprechender Verfahrensausführung - auch Wasser eingespart werden.

In welcher Form die Kationen in die Phosphatierbäder eingebracht werden ist prinzipiell ohne Belang. Es bietet sich insbesondere an, als Kationenquelle Oxide und/oder Carbonate zu verwenden. Wegen der Gefahr einer Aufsalzung der Phosphatierbäder sollten vorzugsweise Salze anderer Säuren als Phosphorsäure vermieden werden.

Bei Phosphatierbädern, die für unterschiedliche Substrate geeignet sein sollen, ist es üblich geworden, freies und/oder komplexgebundenes Fluorid in Mengen bis zu 2,5 g/l Gesamtfluorid, davon bis zu 750 mg/l freies Fluorid, jeweils berechnet als F⁻ , zuzusetzen. Bei Abwesenheit von Fluorid soll der Aluminiumgehalt des Bades 3 mg/l nicht überschreiten. Bei Gegenwart von Fluorid werden infolge der Komplexbildung höhere Al-Gehalte toleriert, sofern die Konzentration des nicht komplexierten Al 3 mg/l nicht übersteigt.

Außer den schichtbildenden zweiwertigen Kationen enthalten Phosphatierbäder in der Regel zusätzlich Natrium-, Kalium- und/oder Ammoniumionen zur Einstellung der freien Säure.

Phosphatierbäder, die ausschließlich der Behandlung von verzinktem Material dienen, müssen nicht notwendigerweise einen sogenannten Beschleuniger enthalten. Beschleuniger, die bei der Phosphatierung unverzinkter Stahloberflächen erforderlich sind, werden in der Technik jedoch auch häufig bei der Phosphatierung von verzinktem Material mit eingesetzt. Beschleunigefialtige Phosphatierlösungen haben den zusätzlichen Vorteil, daß sie sowohl für verzinkte als auch für unverzinkte Materialien geeignet sind. Dies ist besonders bei der Phosphatierung von Automobilkarrosserien wichtig, da diese häufig sowohl verzinkte als auch unverzinkte Oberflächen enthalten.

Im Stand der Technik stehen für Phosphatierbäder unterschiedliche Beschleuniger zur Verfügung. Sie beschleunigen die Schichtausbildung und erleichtem die Bildung geschlossener Phosphatschichten, da sie mit dem bei der Beizreaktion entstehenden Wasserstoff reagieren. Dieser Prozeß wird als "Depolarisierung" bezeichnet. Das Entstehen von Wasserstoffblasen an der Metalloberfläche, die die Schichtausbildung stören, wird hierdurch verhindert.

Beispielsweise kann die Phosphatierlösung einen oder mehrere der folgenden Beschleuniger enthalten:

| | |
|---|---|
| 0,3 bis 4 g/l | Chlorationen |
| 0,01 bis 0,2 g/l | Nitritionen |
| 0,1 bis 10 g/l | Hydroxylamin |
| 0,001 bis 0,15 g/l | Wasserstoffperoxid in freier oder gebundener Form |
| 0,5 bis 80 g/l | Nitrationen. |

Zusammen mit oder anstelle von Chlorationen kann als Beschleuniger vorteilhafterweise Wasserstoffperoxid verwendet werden. Dieses kann als solches oder in Form von Verbindungen eingesetzt werden, die unter den Bedingungen des Phosphatierbads Wasserstoffperoxid bilden.

Ein im Rahmen des erfindungsgemäßen Verfahrens ebenfalls vorzugsweise zu verwendender Beschleuniger ist Hydroxylamin. Dieses setzt man in freier Form oder in Form von Hydroxylammoniumphosphaten, Hydroxylammoniumnitrat und/oder Hydroxylammoniumsulfat dem Phosphatierbad zu.

In einer Ausführungsform der Erfindung führt man Spülwasser, das nach der Nachpassivierung anfällt, in die Nachpassivierungslösung über. Dies hat zum einen den Vorteil, daß das nickelhaltige Spülwasser nicht aufbereitet und entsorgt werden muß, und zum anderen, daß die von der Metalloberfläche abgespülten Wirkstoffe der Nachpassivierungslösung in diese zurückgeführt werden. Sofern die Nachpassivierungslösung durch Rückführung des Spülwassers zu stark verdünnt wird; muß man durch Zusatz von Nickel- und/oder Phosphationen dafür sorgen, daß der wirksame Konzentrationsbereich eingestellt bleibt.

Eine Rückführung des Spülwassers in die Nachpassivierungslösung wird mit der Zeit dazu führen, daß das Becken. bzw. der Vorratsbehälter für die Nachpassivierungslösung überläuft. Man verfährt dann so, daß kontinuierlich oder diskontinuierlich ein Teil der Nachpassivierungslösung einer Nanofiltration oder einer Umkehrosmose unterzogen wird, wobei man das Retentat (= Konzentrat) der Nanofiltration oder der Umkehrosmose in die Phosphatierlösung überführt, mit der die Metalloberfläche vor der Nachpassivierung phosphatiert wird. Diese Verfahrensweise hat den Vorteil, daß der Überlauf der Nachpassivierungslösung nicht als Abwasser entsorgt werden muß. Vielmehr werden durch die Membranfiltration (Nanofiltration oder Umkehrosmose) die Wirkstoffe Nickel und Phosphat der Nachpassivierungslösung aufkonzentriert und in die Phosphatierlösung überführt, wo sie wiederum Wirkstoffe darstellen. Dies gilt insbesondere dann, wenn die Phosphatierungslösung eine schichtbildende nickelhaltige Zinkphosphatierungslösung darstellt. Hierdurch wird der Kreislauf für Nickelionen geschlossen, so daß diese die gesamte Phosphatieranlage nur noch durch den Einbau in die Zinkphosphatschicht verlassen. Nickelhaltiges Abwasser tritt allenfalls noch in dem geringen Maße auf, in dem Nickelionen die Nanofiltrationsoder Umkehrosmosemembran durchdringen können und mit dem Permeat ausgetragen werden.

Eine weitere Ausführungsform des erfindungsgemäßen Verfahrens besteht darin, daß man die phosphatierte Metalloberfläche zwischen der Phosphatierung und der Behandlung mit der Nachpassivierungslösung mit Wasser spült, sie mit der Nachpassivierungslösung behandelt und sie nach der Behandlung mit der Nachpassivierungslösung erneut mit Wasser spült. In dieser Ausführungsform wird Spülwasser aus der Spülung nach der Nachpassivierung in das Spülwasser für die Spülung vor der Nachpassivierung überführt. Das gebrauchte Spülwasser nach der Nachpassivierung stellt also kein Abwasser dar, sondern wird als Spülwasser vor der Nachpassivierung nochmals verwendet. Diese Rückführung des Spülwassers hat zur Folge, daß das Bad bzw. der Vorratsbehälter für das Spülwasser vor der Nachpassivierung überläuft. Daher sieht man für diese Ausführungsform vor, daß ein Teil des Spülwassers, das zum Spülen zwischen Phosphatierung und Nachpassivierung verwendet wird, kontinuierlich oder diskontinuierlich einer Nanofiltration oder einer Umkehrosmose unterzogen wird. Dann verfährt man weiter wie bei der vorstehend beschriebenen Ausführungsform: Das Retentat (= Konzentrat) der Nanofiltration oder Umkehrosmose wird in die Phosphatierlösung überführt, mit der die Metalloberfläche vor der Nachpassivierung phosphatiert wird. Damit ist auch in dieser Ausführungsform der Kreislauf für die Nickelionen weitgehend geschlossen, da die Nickelionen aus der Nachpassivierung letztlich in das Phosphatierbad zurückgeführt werden, wo sie in die kristalline Zinkphosphatschicht eingebaut werden. Eine nur noch geringe Menge Nickel verläßt das System im Permeat der Nanofiltration bzw. der Umkehrosmose.

Wenn im Vorstehenden allgemein von "Spülen" gesprochen wird, so ist damit gemeint, daß das Spülen durch Eintauchen der behandelten Metallteile in ein Bad mit Spülwasser oder durch Abspritzen der behandelten Metallteile mit Spülwasser erfolgen kann. Auch Kombinationen hiervon sind möglich. Beispielsweise kann man zuerst durch Eintauchen Vorspülen und anschließend durch Bespritzen Nachspülen.

Bei der Nanofiltration oder Umkehrosmose zum Aufbereiten der Nachpassivierungslösung und/oder von gebrauchtem oder überschüssigem Spülwasser wird ein Permeat erhalten, das nur noch etwa 0,5 bis 3 ppm Nickelionen enthält. Soll das Permeat entsorgt werden, können die Nickelionen alkalisch ausgefällt werden. Das Permeat kann jedoch auch durch Ionenaustauscher weiter gereinigt werden. Hierdurch wird es möglich, einen Anteil des Nickels im Ionenaustaucher zu binden. Nach Eluierung des Austauschers kann der rückgewonnene Anteil an Nickelionen wieder in das Phosphatierbad zurückgeführt werden. Dieser Teilschritt der Aufarbeitung des Permeats ist näher beschrieben in der deutschen Patentanmeldung 199 18 713.4.

Eine weitere Verfahrensvariante sieht vor, das Permeat der Membranfiltration entweder direkt oder nach Nachbehandlung mit einem Ionenaustauscher zum Spülen der zu phosphatierenden Metalloberflächen nach der Reinigung (Entfettung) und vor der Phosphatierung einzusetzen. Diese Verfahrensweise optimiert den Gesamtprozeß dahingehend, daß nicht nur die Nickelionen, sondem auch das Spülwasser in den Phosphatierkreislauf zurückgeführt werden. Hierdurch wird ein besonders abwasserarmer Betrieb der Phosphatieranlage ermöglicht. Nickelhaltiges Abwasser fällt nur noch in sehr reduziertem Umfang an, so daß man von den Vorteilen nickelhaltiger Zinkphosphatierverfahren profitieren kann, ohne Probleme mit der Behandlung nickethaltiger Abwässer zu haben.

Eine Weiterentwicklung des vorstehend beschriebenen Verfahrens besteht darin, daß man der Nachpassivierungslösung zusätzlich Substanzen zusetzt, die als Phosphatierungsbeschleuniger bekannt sind. Hierdurch werden die Korrosionsschutzeigenschaften der nachpassivierten Phosphatschicht auf der Metalloberfläche weiter verbessert.

Demnach besteht eine Fortbildung des erfindungsgemäßen Verfahrens darin, daß die Nachpassivierungslösung zusätzlich einen oder mehrere Phosphatierungsbeschleuniger ausgewählt aus

| | |
|---|---|
| 0,05 bis 2 g/l | m-Nitrobenzolsulfonationen, |
| 0,1 bis 10 g/l | Hydroxylamin in freier oder gebundener Form, |
| 0,05 bis 2 g/l | m-Nitrobenzoationen, |
| 0,05 bis 2 g/l | p-Nitrophenol, |
| 1 bis 70 mg/l | Wasserstoffperoxid in freier oder gebundener Form, |
| 0,05 bis 10 g/l | organische N-Oxide |
| 0,1 bis 3 g/l | Nitroguanidin |
| 1 bis 500 | mg/l Nitritionen |
| 0,5 bis 5 g/l | Chlorationen |

enthält.

Dabei ist es besonders vorteilhaft, wenn die Nachpassivierungslösung denselben oder dieselben Phosphatierbeschleuniger enthält wie die zur Herstellung der phosphatierten Metalloberfläche verwendete Phosphatierlösung. Bei der vorstehend beschriebenen Aufarbeitung von Spülwasser durch Umkehrosmose oder Nanofiltration und Rückführung des Konzentrats in das Phosphatierbad gelangen dann nur solche Substanzen in die Phosphatierlösung, die für deren Funktionsfähigkeit vorgesehen sind: Nickelionen, Phosphationen und Moleküle bzw. Ionen des Beschleunigers. Bei der beschriebenen Spülwasser-Aufarbeitung gelangen demnach lediglich Wertstoffe, aber keine Fremdstoffe in die Phosphatierlösung.

Eine besonders bevorzugte Ausführungsform der Erfindung besteht dann darin, daß die Nachpassivierungslösung und die Phosphatierlösung als Beschleuniger Hydroxylamin in freier Form oder in Form von Hydroxylammoniumphosphaten, Hydroxylammoniumnitraten und/oder Hydroxylamminiumsulfaten enthalten.

### Ausführungsbeispiel

In einer Versuchsreihe wurden Probebleche aus Stahl mit einer handelsüblichen Trikation-Phosphatierlösung phosphatiert, die als Beschleuniger Hydroxylamin enthielt. Dabei wurde folgender Verfahrensgang als Spritzverfahren durchgeführt:
1. Reinigen mit Ridoline^{R} 1561 (Henkel KGaA)

| | |
|---|---|
| Ansatz | 1,0 % |
| Temperatur | 55°C |
| Zeit | 2 Minuten |

2. Spülen
3. Aktivieren mit Fixodine^{R} C 9112 (Henkel KGaA)

| | |
|---|---|
| Ansatz | 0,1 % in vollentsalztem Wasser |
| Temperatur | Raumtemperatur |
| Zeit | 1 Minute |

4. Phosphatieren mit Granodine^{R} 1993 (Henkel KGaA)

| | |
|---|---|
| Ansatz | laut Betriebsanleitung |
| Temperatur | 52°C |
| Zeit | 2 Minuten |
| Freie Säure | 0,7 Punkte (bis pH 3,6/10 ml Vorlage) |
| Gesamtsäure | 23,0 Punkte (bis pH 8,5 / 10 ml Vorlage) |
| NH₂OH | 0,8 g/l |
| Zn | 1,1 g/l |
| Mn | 0,6 g/l |
| Ni | 0,6 g/l |
| H₂PO₄⁻ | 15,0 g/l |
| SiF₆²⁻ | 1,0 g/l |
| Na⁺ | 2,6 g/l |
| NO₃⁻ | 6,0 g/l |

5. Spülen
6. Alternative Nachspülung A, B oder C
A. Nachspülung mit VE-Wasser (Vergleich)
B. Nachpassivierung auf Basis von Nickelphosphat

| | | | |
|---|---|---|---|
| Ansatz | Rohstoffe | H₃PO₄ - 75 % | 0,39 % in vollentsalztem Wasser |
| | | NiCO₃ - 92 % | 0,031 % |
| Ni²⁺ | 140 ppm | | |
| H₂PO₄⁻ | 2900 ppm | | |
| pH | 4,0 (eingestellt mit Natriumcarbonatlösung) | | |
| Temperatur | Raumtemperatur | | |
| Zeit | 1 Minute | | |

C. Beschleunigte Nachpassivierung auf Basis von Nickelphosphat

| | | | |
|---|---|---|---|
| Ansatz | Rohstoffe | H₃PO₄ - 75 % | 0,39 % in VE-Wasser |
| | | NiCO₃ - 92 % | 0,031 % |
| | | NH₂OH | 0.08 % |
| Ni²⁺ | 140 ppm | | |
| H₂PO₄⁻ | 2900 ppm | | |
| NH₂OH | 0,8 g/l | | |
| pH | 4,0 | | |
| Temperatur | Raumtemperatur | | |
| Zeit | 1 Minute | | |

7. Spülen mit vollentsalztem Wasser
8. Trocknen
Lackierung: KTL: FT 85-7042 (Fa. BASF)
Korrosionstests: Wechselklimatest VDA 621-415 + VW-Steinschlag P3.17.1.: 10 Runden

| | Unterwanderung U/2 (mm) | VW-Steinschlag K-Werte |
|---|---|---|
| Granodine 1993 Nachspülung VE-Wasser (A) | 1,2 | 8 |
| Granodine 1993 Nachpassivierung auf Basis von Nickelphosphat (B) | 0,9 | 7 |
| Granodine 1993 Nachpassivierung auf Basis von NH₂OH und Nickelphosphat (C) | 0,7 | 6 |

Gebrauchtes oder überschüssiges Spülwasser sowie überschüssige Nachpassivierungslösung können durch Nanofiltration oder Umkehrosmose weiter behandelt werden. Für eine Nanofiltration oder eine Umkehrosmose stehen im Stand der Technik unterschiedliche Membrantypen zur Verfügung. Da die Behandlungslösungen und auch die entsprechenden Spülwässer sauer reagieren, sollte die eingesetzte Membran säurestabil sein. Geeignet sind beispielsweise anorganische Membranen wie z. B. Keramikmembranen. Weiterhin können organische Polymermembranen eingesetzt werden. Insbesondere ist eine Polyamid-Membran als Nanofiltrationsmembran geeignet.

Für den Schritt der Nanofiltration ist beispielsweise eine Desal DK-Membran geeignet. Bei einer Druckdifferenz von 7 bar und einer Temperatur von 35 °C liefert sie bei einem Volumenverhältnis Konzentrat : Filtrat = 1 : 1 einen Membranfluß der Größenordnung 35 bis 40 l pro m² und Stunde. Für den Schritt der Umkehrosmose kann beispielsweise eine Filmtec SW 30-Membran der Firma Rochem eingesetzt werden. Bei einer Druckdifferenz von 25 bar und einer Temperatur von 45 °C ergibt sie bei einem Volumenverhältnis Konzentrat: Filtrat = 5 : 1 einen Membranfluß von etwa 30 l pro m² und Stunde.

Das Retentat (Konzentrat) der Membranfiltration kann in das Phosphatierbad rückgeführt werden. Aus dem Permeat (Filtrat) kann restliches Nickel durch einen schwach sauren Ionenaustauscher gebunden werden. Als schwach sauren Ionenaustauscher setzt man vorzugsweise einen solchen Typ ein, der selektiv ist für Nickelionen und gegebenenfalls Zinkionen. Demgegenüber sollen einwertige Kationen möglichst wenig gebunden werden. Hierfür sind insbesondere solche schwach sauren Ionenaustauscher geeignet, die chelatbildende Iminodiessigsäuregruppen tragen. Ein geeignetes Produkt ist Lewatit TP 207 der Firma Bayer.

Vorzugsweise betreibt man dann das Verfahren so, daß der schwach saure Ionenaustauscher nach Beladung mit einer starken Säure regeneriert wird. Die selektiv gebundenen Kationen werden hierbei eluiert und können für Zwecke der Phosphatierung wieder verwendet werden. Durch Verwendung des erfindungsgemäßen Verfahrens müssen diese Kationen nicht als schwermetatlhaltiger Schlamm entsorgt werden sondern können - ggf. nach geeigneter Aufbereitung - wieder zur Phosphatierung eingesetzt werden. Hierdurch werden Ressourcen geschont. Besonders bevorzugt ist es, für die Regenerierung des beladenen schwach sauren Ionenaustauschers eine solche Säure zu verwenden, die einen Wertstoff für die Phosphatierlösung darstellt. Insbesondere ist Phosphorsäure geeignet. Salpetersäure kann ebenfalls verwendet werden, wenn die Phosphatierlösung Nitrationen als Beschleuniger oder als Co-Beschleuniger enthalten soll..

Das Regenerat kann dann unmittelbar oder nach Ergänzung mit weiteren Wirkstoffen zur Ergänzung einer Phosphatierlösung wieder verwendet werden. Dabei ist es besonders bevorzugt, das Regenerat so mit weiteren Zink- und/oder Nickelionen sowie mit weiteren Wirkstoffen einer Phosphatierlösung zu ergänzen, daß eine konventionelle Ergänzungslösung für ein Phosphatierbad entsteht. Diese Ergänzungslösung kann dann wie üblich zur Ergänzung des Phosphatierbads verwendet werden.

Die an Kationen abgereicherte Lösung, die den schwach sauren Kationenaustauscher in dessen Beladungsphase verläßt, kann je nach Inhaltsstoffen einer vereinfachten Abwasserbehandlung zugeführt oder direkt in eine biologische Kläranlage eingeleitet werden. Wirtschaftlicher ist es jedoch; diese Lösung als Spülwasser für die zu phosphatierenden Metallteile nach deren Entfettung zu verwenden. Diese Ausführungsform des erfindungsgemäßen Verfahrens hat den zusätzlichen Vorteil, daß Spülwasser eingespart wird.

Im Ausführungsbeispiel wurde das Spülwasser nach der Nachpassivierüng in die Spüle nach der Phosphatierung überführt und das Spülwasser nach der Phosphatierung durch Nanofiltration aufgearbeitet. Die Versuchsparameter und Ergebnisse der Nanofiltration sind wie folgt:

### B. Nachpassivierung auf Basis von Nickelphosphat

| Nachpassivierung | Nachpassivierungsspülwasser |
|---|---|
| Ni²⁺ : 140 ppm | 7 ppm |
| H₂PO₄⁻ : 2900 ppm | 145 ppm |
| Na⁺ : 570 ppm | 28 ppm |
| pH : 4,0 | nicht gemessen |

### C. Nachpassivierung auf Basis von Nickelphosphat und Hydroxylamin

| Nachpassivierung | Nachpassivierungsspülwasser |
|---|---|
| Ni²⁺ : 140 ppm | 7 ppm |
| H₂PO₄⁻ : 2900 ppm | 145 ppm |
| NH₂OH : 800 ppm | 40 ppm |
| pH : 4,0 | nicht gemessen |

Nachpassivierungsspülwasser wird in die Spüle nach der Phosphatierung überführt (400 l/h).
Spülwasser nach der Phosphatierung (400 l/h) enthält:

| | B. Nachpassivierung auf Basis von Nickelphosphat | C. Nachpassivierung auf Basis von Nickelphosphat und Hydroxylamin |
|---|---|---|
| Zn²⁺ | 60 mg/l | 60 mg/l |
| Mn²⁺ | 30 mg/l | 30 mg/l |
| Ni²⁺ | 37 mg/l | 37 mg/l |
| Na⁺ | 158 mg/l | 130 mg/l |
| H₂PO₄⁻ | 895 mg/l | 895 mg/l |
| NO₃⁻ | 300 mg/l | 300 mg/l |
| NH₂OH | 40 mg/l | 80 mg/l |
| org. Bestandteile | 10 mg C/l | 10 mg C/l |
| Schlamm | 0,05 g/l | 0,05 g/l |

### Aufbereitung Spülwasser: 400 l/h

I. Schlammentfernung durch Beutelfiltration
Filter: Lofclear^{R} 523 D der Firma Loeffler GmbH

| Teilchengröße | Schlammentfernung |
|---|---|
| < 1,5 Mikron | 95 % |
| < 2,5 Mikron | 99 % |
| < 5,5 Mikron | 99,9 % |

II. Entfernung organischer Bestandteile durch Aktivkohle oder synthetische Harze (z.B. Lewatit^{R} VP OC 1066 oder Dowex^{R} OPTL 285)
Aktivkohle: Lofsorb^{R} LA 40 E-3-01: 22 Filterkerzen der Firma Loeffler GmbH
Rückhalt organischer Bestandteile: 35-45 %
III. Nanofiltration
Betriebsbedingungen:
Desal D5-Membran
Druckdifferenz: 12 bar
Temperatur: 30°C
Membranfluß: 20 l/m² · h
Volumenverhältnis: Konzentrat/Filtrat: 8:1

### Ergebnis:

| | **B. Nachpassivierung auf Basis von Nickelphosphat** | |
|---|---|---|
| | **Konzentrat** | **Filtrat** |
| Zn²⁺ (mg/l) | 506 | 2,6 |
| Mn²⁺ (mg/l) | 204 | 1,0 |
| Ni²⁺ (mg/l) | 270 | 1,2 |
| Na⁺ (mg/l) | 465 | 122 |
| H₂PO₄⁻ (mg/l) | 2650 | 510 |
| NO₃⁻ (mg/l) | 605 | 225 |
| NH₂OH | 117 | 29 |

| | **C. Nachpassivierung auf Basis von Nickelphosphat und Hydroxylamin** | |
|---|---|---|
| | **Konzentrat** | **Filtrat** |
| Zn²⁺ (mg/l) | 507 | 2,4 |
| Mn²⁺ (mg/l) | 211 | 1,0 |
| Ni²⁺ (mg/l) | 272 | 1,0 |
| Na⁺ (mg/l) | 392 | 108 |
| H₂PO₄⁻ (mg/l) | 2655 | 509 |
| NO₃⁻ (mg/l) | 604 | 224 |
| NH₂OH | 240 | 61 |

Wenn Nachpassivierungsspülwasser in die Spüle nach der Phosphatierung überführt wird, werden bei Rückführung des Konzentrates der Nanofiltration in das Phosphatierbad keine "Fremdsubstanzen" in der Phosphatierlösung angereichert. Es wird nur mehr Nickel, Phosphat und NH₂OH zurückgeführt.

## Patentansprüche

1. Verfahren zur Nachpassivierung einer phosphatierten Metalloberfläche, **dadurch gekennzeichnet, daß** man die phosphatierte Metalloberfläche mit einer wäßrigen Nachpassivierungslösung behandelt, die nur solche Wirkkomponenten enthält, die auch in einer Phosphatierlösung eingesetzt werden und die 50 bis 500 mg/l Nickelionen und 200 bis 1500 mg/l Phosphationen enthält,
wobei man die phosphatierte Metalloberfläche für eine Zeitdauer im Bereich von 10 Sekunden bis 5 Minuten mit der wäßrigen Nachpassivierungslösung in Kontakt bringt und anschließend mit Wasser abspült, und entweder
a) nach der Nachpassivierung anfallendes Spülwasser in die Nachpassivierungslösung überführt, wobei kontinuierlich oder diskontinuierlich ein Teil der Nachpassivierungslösung einer Nanofiltration oder einer Umkehrosmose unterzogen wird und man das Retentat der Nanofiltration oder der Umkehrosmose in die Phosphatierlösung überführt, mit der die Metalloberfläche vor der Nachpassivierung phosphatiert wird,
oder
b) die phosphatierte Metalloberfläche vor der Behandlung mit der Nachpassivierungslösung mit Wasser spült, sie nach der Behandlung mit der Nachpassivierungslösung erneut mit Wasser spült und Spülwasser aus der Spülung nach der Nachpassivierung in das Spülwasser für die Spülung vor der Nachpassivierung überführt, wobei ein Teil des Spülwassers, das zum Spülen zwischen Phosphatierung und Nachpassivierung verwendet wird, kontinuierlich oder diskontinuierlich einer Nanofiltration oder einer Umkehrosmose unterzogen wird und man das Retentat (Konzentrat) der Nanofiltration oder der Umkehrosmose in die Phosphatierlösung überführt, mit der die Metalloberfläche vor der Nachpassivierung phosphatiert wird.

2. Verfahren nach Anspruch 1, **dadurch gekennzeichnet, daß** die wäßrige Nächpassivierungslösung einen pH-Wert im Bereich von 3 bis 6 aufweist.

3. Verfahren nach einem der Ansprüche 1 und 2, **dadurch gekennzeichnet, daß** die wäßrige Nachpassivierungslösung eine Temperatur zwischen 10 und 50 °C aufweist.

4. Verfahren nach einem oder mehreren der Ansprüche 1 bis 3, **dadurch gekennzeichnet, daß** es sich bei der phosphatierten Metalloberfläche um eine Metalloberfläche handelt, die mit einem nicht schichtbildenden Phosphatierverfahren phosphatiert wurde.

5. Verfahren nach einem oder mehreren der Ansprüche 1 bis 3, **dadurch gekennzeichnet, daß** es sich bei der phosphatierten Metalloberfläche um eine Metalloberfläche handelt, die mit einem schichtbildenden Zinkphosphatierverfahren phosphatiert wurde.

6. Verfahren nach Anspruch 1, **dadurch gekennzeichnet, daß** man das Permeat der Nanofiltration oder der Umkehrosmose zum Spülen der zu phosphatierenden Metalloberflächen zwischen deren Reinigung und deren Phosphatierung verwendet.

7. Verfahren nach einem oder mehreren der Ansprüche 1 bis 6, **dadurch gekennzeichnet, daß** die Nachpassivierungslösung zusätzlich einen oder mehrere Phosphatierungsbeschleuniger ausgewählt aus
0,05 bis 2 g/l m-Nitrobenzolsulfonationen,
0,1 bis 10 g/l Hydroxylamin in freier oder gebundener Form,
0,05 bis 2 g/l m-Nitrobenzoationen,
0,05 bis 2 g/l p-Nitrophenol,
1 bis 70 mg/l Wasserstoffperoxid in freier oder gebundener Form,
0,05 bis 10 g/l organische N-Oxide
0,1 bis 3 g/l Nitroguanidin
1 bis 500 mg/l Nitritionen
0,5 bis 5 g/l Chlorationen
enthält.

8. Verfahren nach Anspruch 7, **dadurch gekennzeichnet, daß** die Nachpassivierungslösung denselben oder dieselben Phosphatierbeschleuniger enthält wie die zur Herstellung der phosphatierten Metalloberfläche verwendete Phosphatierlösung.

9. Verfahren nach Anspruch 8, **dadurch gekennzeichnet, daß** die Nachpassivierungslösung und die Phosphatierlösung als Beschleuniger Hydroxylamin in freier Form oder in Form von Hydroxylammoniumphosphaten, Hydroxylammoniumnitrat und/oder Hydroxylammoniumsulfat enthalten.

## Claims

1. A process for the post-passivation of a phosphated metal surface, **characterized in that** the phosphated metal surface is treated with an aqueous post-passivation solution which contains only those active components that are also used in a phosphating solution and 50 to 500 mg/l nickel ions and 200 to 1500 mg/l phosphate ions,
the phosphated metal surface being contacted with the aqueous post-passivation solution for 10 seconds to 5 minutes and then rinsed with water and either
a) rinsing water accumulating after the post-passivation being transferred to the post-passivation solution, in which case part of the post-passivation solution is continuously or discontinuously subjected to nanofiltration or reverse osmosis and the nanofiltration or reverse osmosis retentate is transferred to the phosphating solution with which the metal surface is phosphated before the post-passivation or
b) the phosphated metal surface being rinsed with water before treatment with the post-passivation solution and re-rinsed with water after treatment with the post-passivation solution and rinsing water from rinsing after the post-passivation being transferred to the rinsing water for rinsing before the post-passivation, part of the rinsing water used for rinsing between phosphating and post-passivation being continuously or discontinuously subjected to nanofiltration or reverse osmosis and the nanofiltration or reverse osmosis retentate (concentrate) being transferred to the phosphating solution with which the metal surface is phosphated before the post-passivation.

2. A process as claimed in claim 1, **characterized in that** the aqueous post-passivation solution has a pH of 3 to 6.

3. A process as claimed in claim 1 or 2, **characterized in that** the aqueous post-passivation solution has a temperature of 10 to 50°C.

4. A process as claimed in one or more of claims 1 to 3, **characterized in that** the phosphated metal surface is a metal surface which was phosphated by a non-layer-forming phosphating process.

5. A process as claimed in one or more of claims 1 to 3, **characterized in that** the phosphated metal surface is a metal surface which was phosphated by a layer-forming zinc phosphating process.

6. A process as claimed in claim 1, **characterized in that** the nanofiltration or reverse osmosis permeate is used to rinse the metal surfaces to be phosphated between their cleaning and their phosphating.

7. A process as claimed in one or more of claims 1 to 6, **characterized in that** the post-passivation solution additionally contains one or more phosphating accelerators selected from
0.05 to 2 g/l m-nitrobenzenesulfonate ions,
0.1 to 10 g/l hydroxylamine in free or bound form,
0.05 to 2 g/l m-nitrobenzoate ions,
0.05 to 2 g/l p-nitrophenol,
1 to 70 mg/l hydrogen peroxide in free or bound form,
0.05 to 10 g/l organic N-oxides,
0.1 to 3 g/l nitroguanidine,
1 to 500 mg/l nitrite ions,
0.5 to 5 g/l chlorate ions.

8. A process as claimed in claim 7, **characterized in that** the post-passivation solution contains the same phosphating accelerator(s) as the phosphating solution used to produce the phosphated metal surface.

9. A process as claimed in claim 8, **characterized in that** the post-passivation solution and the phosphating solution contain hydroxylamine in free form or in the form of hydroxylammonium phosphates, hydroxylammonium nitrate and/or hydroxylammonium sulfate as accelerator.

## Revendications

1. Procédé de post-passivation d'une surface métallique phosphatée, **caractérisé en ce qu'**on traite la surface métallique phosphatée avec une solution aqueuse de post-passivation, qui ne contient que des composants actifs qui sont également utilisés dans une solution de phosphatation et qui contient 50 à 500 mg/l d'ions nickel et 200 à 1500 mg/l d'ions phosphate,
dans lequel on met la surface métallique phosphatée pendant un laps de temps de 10 secondes à 5 minutes en contact avec la solution aqueuse de post-passivation et on la rince ensuite avec de l'eau et soit
a) on transvase l'eau de rinçage obtenue après la post-passivation dans la solution de post-passivation, une partie de la solution de post-passivation étant soumise en continu ou de manière discontinue à une nanofiltration ou une osmose inverse et on transvase le retentat de la nanofiltration ou de l'osmose inverse dans la solution de phosphatation, avec laquelle la surface métallique est phosphatée avant la post-passivation, soit
b) on rince la surface métallique phosphatée avant le traitement avec la solution de post-passivation avec de l'eau, on la rince à nouveau avec de l'eau après le traitement avec la solution de post-passivation et on transvase l'eau de rinçage provenant du rinçage après la post-passivation dans l'eau de rinçage destinée au rinçage avant la post-passivation, une partie de l'eau de rinçage utilisée pour le rinçage entre la phosphatation et la post-passivation étant soumise en continu ou de manière discontinue à une nanofiltration ou une osmose inverse et on transvase le retentat (concentrat) de la nanofiltration ou de l'osmose inverse dans la solution de phosphatation avec laquelle la surface métallique est phosphatée avant la post-passivation.

2. Procédé selon la revendication 1, **caractérisé en ce que** la solution aqueuse de post-passivation présente un pH dans la plage de 3 à 6.

3. Procédé selon l'une quelconque des revendications 1 et 2, **caractérisé en ce que** la solution aqueuse de post-passivation présente une température entre 10 et 50°C.

4. Procédé selon l'une ou plusieurs des revendications 1 à 3, **caractérisé en ce qu'**il s'agit, pour la surface métallique phosphatée, d'une surface métallique qui a été phosphatée par un procédé de phosphatation ne formant pas de couches.

5. Procédé selon l'une ou plusieurs des revendications 1 à 3, **caractérisé en ce qu'**il s'agit, pour la surface métallique phosphatée, d'une surface métallique qui a été phosphatée par un procédé de phosphatation au zinc formant des couches.

6. Procédé selon la revendication 1, **caractérisé en ce que** le perméat de la nanofiltration ou de l'osmose inverse est utilisé pour le rinçage des surfaces métalliques à phosphater entre leur nettoyage et leur phosphatation.

7. Procédé selon l'une ou plusieurs des revendications 1 à 6, **caractérisé en ce que** la solution de post-passivation contient en outre un ou plusieurs accélérateurs de phosphatation, choisis parmi
0,05 à 2 g/l d'ions m-nitrobenzènesulfonate,
0,1 à 10 g/l d'hydroxylamine sous forme libre ou liée,
0,05 à 2 g/l d'ions m-nitrobenzoate,
0,05 à 2 g/l de p-nitrophénol,
1 à 70 mg/l de peroxyde d'hydrogène sous forme libre ou liée,
0,05 à 10 g/l de N-oxydes organiques,
0,1 à 3 g/l de nitroguanidine,
1 à 500 mg/l d'ions nitrite,
0,5 à 5 g/l d'ions chlorate.

8. Procédé selon la revendication 7, **caractérisé en ce que** la solution de post-passivation contient le même ou les mêmes accélérateurs de phosphatation que la solution de phosphatation utilisée pour la réalisation de la surface métallique phosphatée.

9. Procédé selon la revendication 8, **caractérisé en ce que** la solution de post-passivation et la solution de phosphatation contiennent comme accélérateur de l'hydroxylamine sous forme libre ou sous forme de phosphates d'hydroxylammonium, de nitrate d'hydroxylammonium et/ou de sulfate d'hydroxylammonium.
